Europäisches Patentamt

European Patent Office

Office européen des brevets

(11) Publication number: **0 355 407**
**A1**

# EUROPEAN PATENT APPLICATION

(21) Application number: 89113330.8

(22) Date of filing: 20.07.89

(51) Int. Cl.⁴ **G03B 21/32 , G03D 15/00 , G03B 21/42**

(30) Priority: 20.07.88 JP 182519/88

(43) Date of publication of application:
**28.02.90 Bulletin 90/09**

(84) Designated Contracting States:
**DE FR GB**

(71) Applicant: **SOMAR CORPORATION**
**11-2, Ginza 4-chome Chuo-ku**
**Tokyo(JP)**

(72) Inventor: **Shioiri, Shigeo**
**No. 1-12-21, Fusa**
**Abiko-shi Chiba(JP)**

(74) Representative: **Boeters, Hans Dietrich, Dr. et**
**al**
**Boeters & Bauer, Patentanwälte**
**Thomas-Wimmer-Ring 14**
**D-8000 München 22(DE)**

(54) **Motor-driven winder.**

(57) In a motion picture projector, defects in film
perforations are detected by a damaged film detec-
tion unit disposed between feed and take-up rolls of
the projector along a film running path thereof. A
cleaning unit also may be provided along the film
running path, for efficient cleaning of the film during
rewinding.

## FIG. 1

## MOTOR-DRIVEN WINDER

## BACKGROUND OF THE INVENTION

This invention relates to a motor-driven winder, and more particularly to a technique effectively applicable to a motor-driven film winder for a motion picture projector.

A conventional motor-driven winder has included: a film plate on the film feed side (hereinafter referred to as a "feed film plate", when applicable); a film plate on the film take-up side (hereinafter referred to as "a take-up film plate", when applicable); a film tension roller; film guide rollers; and an electric motor for rotating the take-up film plate.

When a motion picture film is used for a long period of time, its perforations may become damaged. It is rather difficult to rewind a motion picture film having broken perforations. Further, a motion picture film used repeatedly may be damaged while being rewound.

A wire brush has been used to detect the damaged parts of the motion picture film used for a long time. Using a wire brush to detect the damaged parts of a motion picture film used for a long time is disadvantageous in that, if the wire brush is used repeatedly, it becomes worn out and cannot detect the damaged parts. The invention has been developed to eliminate this difficulty.

Accordingly, one object of this invention is to provide a technique of accurately detecting the damaged perforations and other damaged parts of a film at all times.

Another object of the invention is to provide a technique of cleaning a film while rewinding it.

## SUMMARY OF THE INVENTION

The foregoing and other objects of the invention have been achieved by the provision of a motor-driven winder which includes a motor-driven winder comprising: a feed film plate provided on a film feeding side; a take-up film plate provided on a film taking-up side; a film tension roller; film guide rollers; and an electric motor for rotating the take-up film plate, with one or both of a damaged parts detecting unit arranged in place on a film running path between the feed film plate and the take-up film plate, and a film cleaning unit for cleaning a film, the film cleaning unit being arranged in place on the film running path between the feed film plate and the take-up film plate.

In the motor-driven winder according to the invention, the film's damaged parts detecting unit is arranged in place on the film running path between the feed film plate and the take-up film plate. Therefore, even if the winder is used for a long time, the damaged perforations or other damaged parts of the film can be detected with high accuracy.

Furthermore, in the motor-driven winder according to the invention, the film cleaning unit is arranged in position on the film running path between the feed film plate and the take-up film plate. Therefore, the film can be cleaned efficiently when being rewound.

Thus, with the motor driven winder of the invention, the projection film is maintained in good condition at all times, and projection is carried out with excellent picture quality.

## BRIEF DESCRIPTION OF THE DRAWINGS

One preferred embodiment of this invention now will be described in detail with reference to the accompanying drawings, in which like parts are designated by like reference numerals.

Fig. 1 is a plan view showing one example of a motor-driven winder according to the invention.

Fig. 2 is a plan view outlining the arrangement of a film's damaged parts detecting unit shown in Fig. 1.

Fig. 3 is a plan view outlining the arrangement of a film cleaning unit shown in Fig. 1.

## DETAILED DESCRIPTION OF THE PREFERRED EMBODIMENT

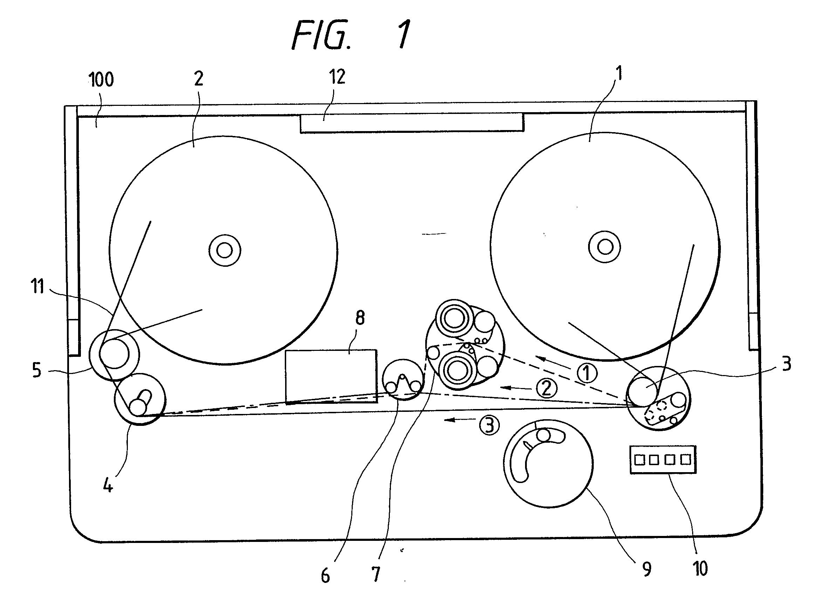

In Fig. 1, a feed film plate 1 and a take-up film plate 2 are provided on a top plate 100. The feed film plate 1 receives a projection film 11 wound on a reel, and the take-up film plate 2 takes up the film loaded on the feed film plate 1.

The torque of an electric motor is transmitted to the rotary shaft of the take-up film plate 2. A film tension roller 4 for stretching tight the film being run, film guide rollers 3 and 5, a films damaged parts detecting unit 6 comprising a photo-detector, a film cleaning unit 7, and a film observing magnifying lens 8 are arranged between the feed film plate 1 and the take-up film plate 2.

In addition, a start-stop speed adjusting switch 9, a film running control switch 10, and a length (time) measuring counter 12 are provided in position on the top plate 100. The projection film 11 wound on the reel is run from the feed film plate 1 through the film guide roller 3, the film tension roller 4, the film's damaged parts detecting unit 6, the film cleaning unit 7, and the film guide roller 5 to the take-up film plate 2, where it is wound on the reel.

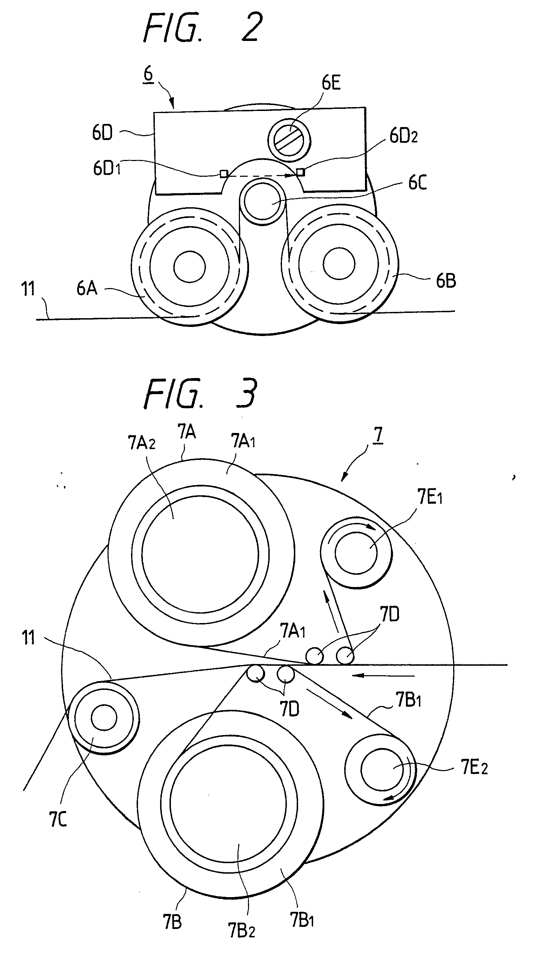

The film's damaged parts detecting unit 6, as shown in Fig. 2, includes film guide rollers 6A and 6B, a film defect detecting guide roller 6C, and a photo-detector 6D confronting the film defect detecting guide roller 6C. The photo-detector 6D is made up of a light emitting element $6D_1$ and a light receiving element $6D_2$. These elements are positioned so that the output light beam of the light emitting element $6D_1$ is tangent to the film defect detecting guide roller 6C. The photo-detector 6D is secured to the top plate 100 with a mounting screw 6E. The film 11 being run is laid over the film guide roller 6A, the film defect detecting roller 6C, and the film guide roller 6B in that order.

The film cleaning unit 7, as shown in Fig. 3, include a cleaning tape roll 7A on which a cleaning tape $7A_1$ of woven, unwoven, or knitted cloth is wound; and a cleaning tape roll 7B on which a cleaning tape $7B_1$ of woven cloth or the like is wound. The cleaning tape rolls 7A and 7B are rotatably mounted on rotary shafts $7A_2$ and $7B_2$, respectively, which are positioned in place on the top plate 100. The film cleaning unit 7 further comprises: cleaning tape guide rollers 7D for guiding the cleaning tapes; and cleaning tape take-up rollers $7E_1$ and $7E_2$ for winding the cleaning tapes.

It is preferable that the cleaning tapes are made of, for instance, fibers having serface area of 5000 $cm^2/g$ and fineness of more than 0.001 denier (as disclosed by Japanese Patent Application Publication No. 30419/1983).

The operation of the motor-driven winder thus constructed will be described.

In the case where both the film's damaged parts detecting unit 6 and the film cleaning unit 7 are used, the projection film 11 wound on the reel on the feed film plate 1, as indicated by the arrow (1) in Fig. 1, is run from the feed film plate 1 through the film guide roller 3, the film cleaning unit 7, the film's damaged parts detecting unit 6, the film tension roller 4 and the film guide roller 5 to the take-up film plate 2, where it is wound on the reel mounted thereon.

In the case where only the film's damaged parts detecting unit 6 is used, the projection film 11, as indicated by the arrow (2) in Fig. 1, is run from the feed film plate 1 through the film guide roller 3, the film's damaged parts detecting unit 6, the film tension roller 4 and the film guide roller 5 to the take-up film plate 2, where it is wound on the reel. In the case where neither of the units 6 and 7 is used, the projection film 11, as indicated by the arrow (3) in Fig. 3, is run from the feed film plate 1 through the film guide roller 3, the film tension roller 4 and the film guide roller 5 to the take-up film plate 3, where it is wound on the reel.

In the case where the film's damaged parts detecting unit 6 is used, the projection film 11 is passed through the film's damaged parts detecting unit 6 while being laid over the film guide roller 6A, the film defect detecting guide roller 6C and the film guide roller 6B, as shown in Fig. 2, in that order. If, in this operation, the projection film 11 has a damaged perforation or perforations, then the latter do not snugly fit with the film detect detecting guide roller 6C, so that the film is slightly spaced from the guide roller 6C. The photo-detector 6D detects the spacing of the film, and applies a defect detection signal to the control section accordingly.

When the projection film 11 is passed through the film cleaning unit 7, the cleaning tape $7A_1$ of unwoven cloth wound on the cleaning tape roll 7A and the cleaning tape $7B_1$ of unwoven cloth wound on the cleaning tape roll 7B are taken up on the cleaning tape take-up rollers $7E_1$ and $7E_2$, respectively, as shown in Fig. 3, in such a manner that the cleaning tapes $7A_1$ and $7B_1$ are run in the direction opposite to the direction of running of the projection film 11 while being maintained in contact with the film 11 by a film contact roller 7C. Thus, both sides of the film are cleaned with the cleaning tapes.

As is apparent from the above description, in the motor-driven winder of the invention, the film's damaged parts detecting unit 6 is provided in place on the film running path between the feed film plate 1 and the take-up film plate 1. Therefore, even when the film is used for a long time, its damaged perforations or other damaged parts can be positively detected. Furthermore, with the film's damaged parts detecting unit provided in position on the film running path, the spliced parts of the projection film 11 can be detected. In addition, the quality of a projection film, the condition of a projection film, etc., can be detected with ease; that is, material control can be achieved readily.

In the motor-driven winder of the invention, the film cleaning unit 7 with the cleaning tapes of unwoven cloth is arranged in place on the film running path between the feed film plate 1 and the take-up film plate 2. Therefore, in rewinding the projection film, the film can be cleaned very efficiently.

Thus, the projection film is maintained in good condition at all times, and accordingly projection picture quality is satisfactory.

While one preferred embodiment of the invention has been described, it is to be understood that the invention is not limited thereto or thereby, and it will be obvious to those skilled in the art that various changes and modifications may be made therein without departing from the point of the invention. For instance, although one feed film plate and one take-up film plate are provided in the above-described motor-driven winder, a plurality of feed film plates and/or a plurality of take-up film plates may be provided. Furthermore, the film may be run in a direction opposite to that shown in the figures.

## Claims

1. A motor-driven winder for winding a film in a motion picture projector, said winder comprising:
a feed film plate provided on a side of said projector from which said film is fed;
a take-up film plate provided on a side of said projector on which said film is taken up, said feed film plate and said take-up film plate defining a film running path therebetween;
a film tension roller and film guide rollers disposed along said film running path;
an electric motor for rotating said take-up film plate; and
a damaged parts detecting unit, disposed on said film running path, for detecting damaged perforations of said film.

2. A motor-driven winder as claimed in claim 1, further comprising a film cleaning unit, disposed along said film running path, for cleaning said film.

3. A motor-driven winder as claimed in claim 2, wherein said film cleaning unit is disposed between said damaged parts detecting unit and said feed film plate along said film running path.

4. A motor-driven winder for winding a film in a motion picture projector, said winder comprising:
a feed film plate provided on a side of said projector from which said film is fed;
a take-up film plate provided on a side of said projector on which said film is taken up, said feed film plate and said take-up film plate defining a film running path therebetween;
a film tension roller and film guide rollers disposed along said film running path;
an electric motor for rotating said take-up film plate; and
a film cleaning unit, disposed along said film running path, for cleaning said film.

5. A motor-driven winder as claimed in claim 4, further comprising a damaged parts detecting unit, disposed on said film running path, for detecting damaged perforations of said film.

6. A motor driven winder as claimed in claim 5, wherein said film cleaning unit is disposed between said damaged parts detecting unit and said feed film plate along said film running path.

FIG. 1

EP 0 355 407 A1

# FIG. 2

# FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 152 053 (R. F. MENARY) <br> * abstract; figures 1,4,9-12; column 1, lines 19-29; column 1, line 56 - column 2, line 8; column 2, lines 38-43; column 3, line 67 - column 5, line 49; claims 2,6,7 * <br> --- | 1-6 | G 03 B 21/32 <br> G 03 D 15/00 <br> G 03 B 21/42 |
| A | DE-A-2 606 769 (H. R. SONHUETER) <br> * claims 1-12; page 4, paragraph 2; page 5, paragraph 3 - page 6, paragraph 4; figures 1-5 * <br> --- | 1,4,5 | |
| A | US-A-3 744 308 (H. D. VOGT) <br> * abstract; figures 1,2; claims 1-5 * <br> --- | 1,4,5 | |
| A | US-A-3 952 591 (W. C. MANSKE et al.) <br> * abstract; figures 1-3,9-17,21; claims 1,8,16,17 * <br> --- | 1-6 | |
| D,A | US-A-2 934 949 (R. F. GRUNWALD et al.) <br> * figures 1,2,5,9,10; column 3, lines 28-36; column 6, line 35 - column 7, line 59; claim 9 * <br> ----- | 1,4,5 | TECHNICAL FIELDS SEARCHED (Int. Cl.5) <br><br> G 03 B <br> G 03 D |

The present search report has been drawn up for all claims

| Place of search | Date of completion of the search | Examiner |
|---|---|---|
| BERLIN | 27-10-1989 | MANNTZ W W |